# EUROPEAN PATENT SPECIFICATION

(11) **EP 3 991 390 B1**
(45) Date of publication and mention of the grant of the patent: **26.03.2025**
(21) Application number: 20740475.7
(22) Date of filing: 26.06.2020
(51) Int. Cl.: H04L 67/1001, H04L 67/63

(54) **CONNECTION POOLING FOR SCALABLE NETWORK SERVICES**
VERBINDUNGSPOOLING FÜR SKALIERBARE NETZWERKDIENSTE
MISE EN COMMUN DE CONNEXIONS POUR DES SERVICES DE RÉSEAU ÉVOLUTIFS

(30) Priority: 28.06.2019 US 201916457504; 28.06.2019 US 201916457537; 28.06.2019 US 201916457570
(43) Date of publication of application: 04.05.2022
(73) Proprietor: Amazon Technologies Inc., Seattle, WA 98108-1226 (US)
(72) Inventor: SIEFKER, Adam Charles, Seattle, Washington 98109-5210 (US); OCZKOWSKI, Sean, Seattle, Washington 98109-5210 (US); RICHARDSON, David, Seattle, Washington 98109-5210 (US); DWARAKANATH, Samvid H., Seattle, Washington 98109-5210 (US); BROOKER, Marc John, Seattle, Washington 98109-5210 (US); WEINSTEIN, Orr, Seattle, Washington 98109-5210 (US)
(74) Representative: Bosch Jehle Patentanwaltsgesellschaft mbH
(86) International application number: PCT/US2020/039996
(87) International publication number: WO 2020/264431

(56) References cited:
- US-A1- 2015 264 014

## Description

### BACKGROUND

Computing devices can utilize communication networks to exchange data. Companies and organizations operate computer networks that interconnect a number of computing devices to support operations or to provide services to third parties. The computing systems can be located in a single geographic location or located in multiple, distinct geographic locations (e.g., interconnected via private or public communication networks). Specifically, data centers or data processing centers, herein generally referred to as a "data center," may include a number of interconnected computing systems to provide computing resources to users of the data center. The data centers may be private data centers operated on behalf of an organization or public data centers operated on behalf, or for the benefit of, the general public.

To facilitate increased utilization of data center resources, virtualization technologies allow a single physical computing device to host one or more instances of virtual machines that appear and operate as independent computing devices to users of a data center. With virtualization, the single physical computing device can create, maintain, delete, or otherwise manage virtual machines in a dynamic manner. In turn, users can request computer resources from a data center, including single computing devices or a configuration of networked computing devices, and be provided with varying numbers of virtual machine resources.

Virtualization technologies and data centers enable a variety of new techniques for providing network-based services. One such technique is "micro-services," in which desired functionality is not simply housed within a single device providing a service, but distributed among a variety of smaller, fine-grained services (each a "micro-service"). Micro-services may be independently developed, maintained, managed, and scaled, providing higher flexibility and resiliency to "macro-services" built using the micro-services. A difficulty that arises in the use of micro-services is the need for such services to securely intercommunicate. Often, different micro-services are implemented on different platforms or hosts, and subject to different security constraints. Moreover, different micro-services may scale independently of one another. Independent scaling may be beneficial to the micro-service itself, but cause difficulties in integrating different micro-services. For example, a first micro-service may scale to a point where its communications to another micro-service overwhelm the resources of that other micro-service. American patent application US2015/0264014 describes a security management system for delivering an application i.e. computer software application, hosted by a private application provider system of an individual and a company over a network i.e. Internet, to a user device.

### BRIEF DESCRIPTION OF THE DRAWINGS

FIG. 1 is a block diagram depicting an illustrative logical flow of communications between network services and a database, as facilitated by a connection pool;
FIG. 2 is a block diagram depicting an illustrative environment in which a connection manager service may provide a connection pool to network-based services facilitating secure communications with another network-based service;
FIG. 3 depicts a general architecture of a computing device providing the connection manager service 150 of FIG. 1;
FIG. 4 is a flow diagram depicting illustrative interactions for configuring the connection manager service 150 of FIG. 1 to provide a connection pool for a first network-based service, and for configuring a second network-based service to communicate with the first service via the connection pool;
FIG. 5 is a flow diagram depicting illustrative interactions for securely initiating connections between a connection pool provided by the connection manager service 150 of FIG. 1 and a network-based service to which the pool provides access;
FIGS. 6A and 6B are flow diagrams depicting illustrative interactions for initiating a connection between the connection manager service 150 of FIG. 1 and a network-based service attempting to utilize a connection pool provided by the connection manager service 150;
FIG. 7 is a flow diagram depicting illustrative interactions for securely communicating between a first and second network-based service utilizing a connection pool provided by the connection manager service 150 of FIG. 1;
FIG. 8 is a flow chart depicting an illustrative routine for providing connection pools to connection-limited network services;
FIG. 9 is a flow chart depicting an illustrative routine for initiating connections between serverless code executions and target network services; and
FIG. 10 is a flow chart depicting an illustrative routine for providing authentication to hosted services instances.

### DETAILED DESCRIPTION

Generally described, aspects of the present disclosure relate to facilitating secure, scalable connections between network-based services (such as micro-services) by utilizing an intermediary connection pool provided by a connection management service. As disclosed herein, the connection pool may enable connections to the services on each "side" of the pool to be scaled independently, such that scaling of one service does not overwhelm another service. The connection pool may further provide for traversal of disparate networks hosting respective services, such that services can interact with one another via the pool as if they existed within a common network. Still further, the connection pool may provide a robust security model, by decoupling authentication between two services such that the services can authenticate with one another without requiring each service be provided with authentication information of the other service.

As an illustrative example, consider an instance in which a user stores information in a network-accessible database. The database may provide a limited number of connections, such that if attempts by other services to access the database exceed that number, no connection to the database is possible. Further, consider that the user may configure a second, highly-scalable service to access and utilize information from the database. For example, the second service may be implemented through an on-demand code execution system (sometimes referred to as a "serverless" system), which functions to execute user-defined code on an on-demand basis. If each execution of the user-defined code attempts to access the database, then instances of the second service can be expected to fail if executions of the user-defined code exceed the maximum number of connections provided by the database.

Connection pools provide a solution to this problem, by acting as a "middle man" between network services. For example, where a database has capacity for *n* connections, a connection pool may initiate *n* (or less than *n*) connections to the database. Others services can connect to the connection pool, and submit queries the pool for further submission to the database. In this manner, connections to the database can be expected not to exceed capacity of the database. Moreover, connections pools can provide a type of "oversubscription," such that more than *n* instances of a service can communicate with the database. For example, many database protocols are multi-phase, requiring a service to first open a connection to the database and later use the connection to interact with the database. Thus, a connection between a service and a database can limit other connections to the database, regardless of whether the connection is actively being used. A connection pool can address this issue, by reusing a given connection to a database for multiple accessing services, as required based on activity of the service. For example, each service may initiate a connection to the connection pool independently of the database. As queries are submitted to the connection pool, the pool may select an unused connection to the database, and submit the query to the database over that connection. So long as the number of active connections required by services does not exceed the number of possible connections to the database, the number of services connected to the pool (and thus, "connected" to the database from the point of view of the service) can scale nearly limitlessly.

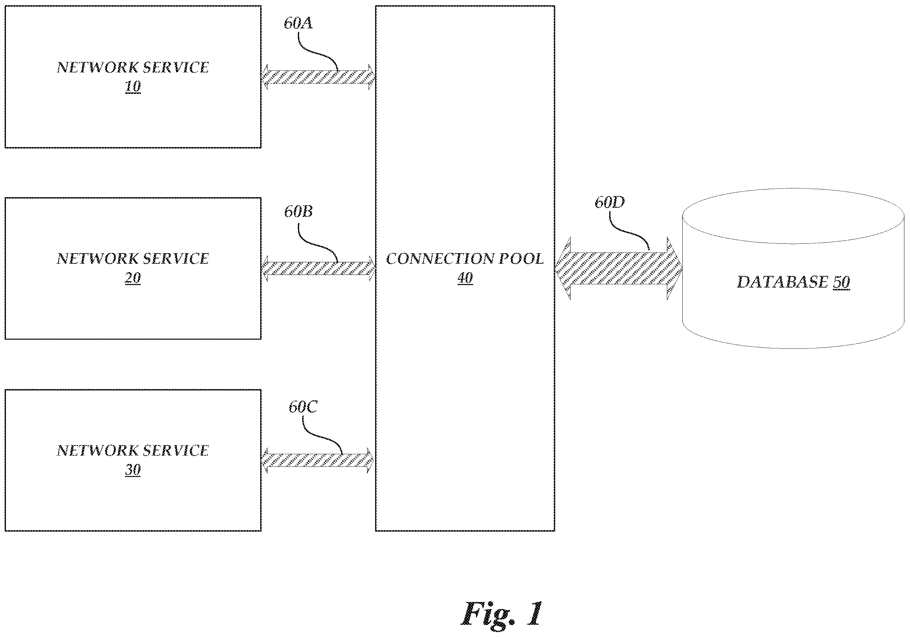

One example of a logical flow of communications between network services and a database, as facilitated by a connection pool, is shown in FIG. 1. Specifically, in FIG. 1, a number of network services 10-30 are shown, each of which functions based on a connection 60 to a database 50. A volume of connections 60 of each service 10-30 is shown as a relative width of the connections 60, with the sum of the volumes of connections 60A-C exceeding a volume of connection 60D. Thus, while the database 50 may support a limited number of connections 60D, the connection pool 40 enables the connections 60A-C of the services 10-30 to exceed that limited number. This configuration is particularly desirable in instances where services 10-30 are configured to scale independently of the database 50.

One option in creating a connection pool 40 would be to manually configure a connection pool 40 for each database 50 (or other resource-limited service). For example, where the services 10-30 and database 50 are implemented in a hosted computing environment (sometimes referred to as a "cloud" computing environment), a user of that environment may also implement a connection pool 40, such as by provisioning a virtual machine instance with software providing the connection pool 40. However, user creation of connection pool 40 imposes significant disadvantages. For example, hosted computing environments often provide isolated networks to various services. Illustratively, a hosted computing environment may enable a user to configure a "virtual private network environment" or "virtual private cloud" ("VPC") such that computing devices included within the network are able to communicate with one another as if they were connected via a physical local area network (LAN). The database 50 of FIG. 1 may be included within such a VPC. If the network services 10-30 are not located within the VPC, use of a connection pool 40 would require that a user "pierce" the VPC boundary, enabling either the services 10-30 or the connection pool 40 to access the VPC.

Moreover, a user-configured connection pool 40 may generally require that the user handle authentication between the services 10-30, the connection pool 40, and the database 50. Illustratively, network services 10-30 may be required to store authentication information for the pool 40, and the pool 40 may be required to store authentication information for the database 50. This may lead to complex, duplicative, and potentially insecure storage of authentication information. For example, where a network service 10 is implemented as user-defined code executing on an on-demand code execution system, storing authentication information in the service 10 may require "hard-coding" a username and password for the service into the user-defined code, which is not generally considered a best practice for security. Moreover, this storage may be duplicative, as the services 10-30 themselves may already be authenticated in some manner. For example, where the services 10-30 are implemented within a hosted computing environment, the services 10-30 can be expected to be authenticated to the hosted computing environment by virtue of their being hosted in that environment. It would be desirable for the services 10-30 to utilize this existing authentication to authenticate to the pool 40, rather than requiring manual storage of additional authentication information.

Still further, manual user configuration of a connection pool 40 may require reconfiguration of network services 10-30 that utilize the pool. For example, a user may be required to modify each service 10-30 to direct requests to the pool 40, such as by modifying user-defined code for the service. Should changes to the pool 40 occur (such as scaling of the pool 40, relocation of the pool 40, etc.), the user may be required to modify each service 10-30 to reflect these changes.

The above-noted problems are addressed in embodiments of the present disclosure, at least partly by use of a connection manager service 150 configured to provide connection pools for hosted services (such as databases). The connection manager service 150 as disclosed herein can be tightly integrated with a hosted computing environment 110 hosting both source services accessing a connection pool and target services accessed by a connection pool. Due at least partly to this integration, the connection manager service 150 can address the problems described above, by enabling secure traversal of isolated networks of the environment, enabling reuse of existing authentication information for hosted services (thus negating a need to separately store authentication information at each service), and enabling programmatic reconfiguration of source services as modifications to the connection pool are made.

While embodiments of the present disclosure are discussed with respect to specific connection-limited services, such as database services, embodiments of the present disclosure can be used to provide connection pooling to any connection-limited network service. Moreover, techniques described herein may be applied to managing communications between a variety of network-based services, and in some cases may be applied outside of the context of connection pooling.

The foregoing aspects and many of the attendant advantages of this disclosure will become more readily appreciated as the same become better understood by reference to the following description, when taken in conjunction with the accompanying drawings.

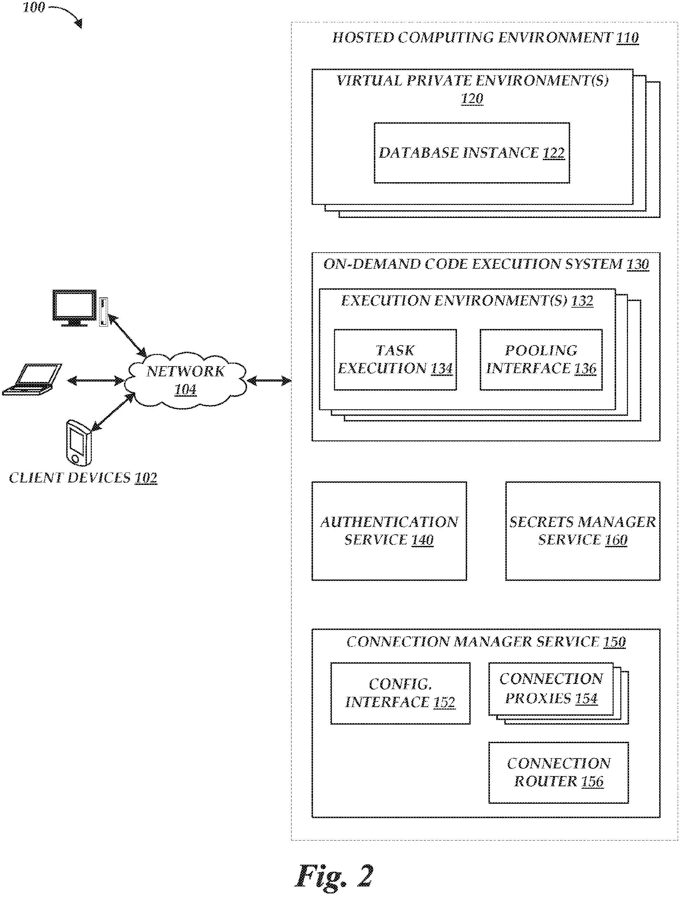

FIG. 2 is a block diagram of an illustrative operating environment 100 in which client devices 102 may interact with a hosted computing environment 110 via a network 104. By way of illustration, various example client devices 102 are shown in communication with the hosted computing environment 110, including a desktop computer, laptop, and a mobile phone. In general, the client devices 102 can be any computing device such as a desktop, laptop or tablet computer, personal computer, wearable computer, server, personal digital assistant (PDA), hybrid PDA/mobile phone, mobile phone, electronic book reader, set-top box, voice command device, camera, digital media player, and the like. The hosted computing environment 110 may provide the client devices 102 with one or more user interfaces, command-line interfaces (CLIs), application programing interfaces (APIs), and/or other programmatic interfaces for utilizing services provided by the hosted computing environment 110, including virtual private environments 120, an on-demand code execution system 130, an authentication service 140, and a secrets manager service 160. Although one or more embodiments may be described herein as using a user interface, it should be appreciated that such embodiments may, additionally or alternatively, use any CLIs, APIs, or other programmatic interfaces. Moreover, while end users may operate client devices 102, client devices 102 may also include non-end-user devices, such as servers, or other devices that access respective services provided by the hosted computing environment 110.

The client devices 102 and hosted computing environment 110 may communicate via a network 104, which may include any wired network, wireless network, or combination thereof. For example, the network 104 may be a personal area network, local area network, wide area network, over-the-air broadcast network (e.g., for radio or television), cable network, satellite network, cellular telephone network, or combination thereof. As a further example, the network 104 may be a publicly accessible network of linked networks, possibly operated by various distinct parties, such as the Internet. In some embodiments, the network 104 may be a private or semi-private network, such as a corporate or university intranet. The network 104 may include one or more wireless networks, such as a Global System for Mobile Communications (GSM) network, a Code Division Multiple Access (CDMA) network, a Long Term Evolution (LTE) network, or any other type of wireless network. The network 104 can use protocols and components for communicating via the Internet or any of the other aforementioned types of networks. For example, the protocols used by the network 104 may include Hypertext Transfer Protocol (HTTP), HTTP Secure (HTTPS), Message Queue Telemetry Transport (MQTT), Constrained Application Protocol (CoAP), and the like. Protocols and components for communicating via the Internet or any of the other aforementioned types of communication networks are well known to those skilled in the art and, thus, are not described in more detail herein.

The hosted computing environment 110 is depicted in FIG. 2 as operating in a distributed computing environment including several computer systems that are interconnected using one or more computer networks (not shown in FIG. 2), which systems operate to provide the virtual private environments 120, on-demand code execution system 130, authentication service 130, connection manager service 150, and secrets manager service 160. Illustratively, the environment 110 includes a number of rapidly provisioned and released computing resources configured to provide the virtual private environments 120, on-demand code execution system 130, authentication service 130, connection manager service 150, and secrets manager service 160. The hosted computing environment 110 may also be referred to as a "cloud computing environment." Each of the virtual private environments 120, on-demand code execution system 130, authentication service 130, connection manager service 150, and secrets manager service 160 could also operate within a computing environment having a fewer or greater number of devices than are illustrated in FIG. 2. Thus, the depiction of the virtual private environments 120, on-demand code execution system 130, authentication service 130, connection manager service 150, and secrets manager service 160 in FIG. 2 should be taken as illustrative and not limiting to the present disclosure. For example, the elements of the environment 110 or various constituents thereof could implement various Web services components and/or peer to peer network configurations to implement at least a portion of the processes described herein. In some instances, two or more of the virtual private environments 120, on-demand code execution system 130, authentication service 130, connection manager service 150, and secrets manager service 160 may be combined into a single service. Each of the virtual private environments 120, on-demand code execution system 130, authentication service 130, connection manager service 150, and secrets manager service 160 may be implemented directly in hardware or software executed by hardware devices and may, for instance, include one or more physical or virtual servers implemented on physical computer hardware configured to execute computer executable instructions for performing various features that will be described herein. The one or more servers may be geographically dispersed or geographically co-located, for instance, in one or more data centers.

Within the hosted computing environment, the virtual private environments 120 represent virtual networking environments that are logically isolated from one another, as well as from other networks. Each environment 120 may include one or more virtual computing devices (e.g., virtual machines or VMs) provided by the environment 110 and configured to operate on behalf of a user, such as to provide a service. For example, an environment 120 of FIG. 2 is depicted as included a database instance 122, which instance 122 can be implemented by a specifically configured virtual computing device hosted within the environment 120 on behalf of a user.

While a database instance 122 is depicted in FIG. 2 as an example of a network-accessible service implemented by a device within a virtual private environment 120, the environments 120 may enable a wide variety of services. For example, the hosted computing environment 110 may enable client devices 102 request, obtain, configure, and manage different types of service instances, each of which represents a computing device (or portion of a computing device) configured to provide a service on behalf of a user. Each service instance may, for example, represent a physical computing device, a virtual computing device, a software container within a computing device, or a thread executing on a computing device. Each service instance may provide a network-accessible service, such as a database service, web hosting service, video transcoding service, or any of a wide variety of known network-accessible services. **In** one embodiment, a service instance, such as the database instance 122, provides a micro-service on behalf of a user. The hosted computing environment 110 can provide a variety of interfaces through which client devices 102 may configure service instances. For example, the hosted computing environment 110 may enable a client device 102 to specify a hardware configuration of each of their service instances (e.g., processing power, memory, etc.) and a software configuration (e.g., an operating system, applications, etc., which may illustratively be provided in the form of a device image provisioned to a disk drive accessible to an instance). The hosted computing environment 110 may further enable a client device 102 to specify how instances within environments 120 should be created, destroyed, or maintained. For example, a client device 102 may specify that an instance should be created or destroyed at certain times or according to certain conditions specified by a user. A variety of techniques for hosting service instances within hosted computing environments are known in the art and thus the details of operation of the environment 110 to provide and manage service instances will not be discussed herein.

The hosted computing environment 110 is illustratively configured to enable devices within each virtual private environment 120 to interact with one another as if they were connected via a physical LAN. For example, where each device within an environment 120 is a virtual computing device hosted by a physical computing device, the hosted computing environment 110 may use virtual networking techniques to encapsulate traffic from the virtual computing devices, and pass that traffic over a substrate physical network connecting the physical computing devices. On receiving traffic from a first virtual device in an environment 120 over the substrate physical network, a physical device may decapsulate the traffic (e.g., strip away encapsulating headers to return the packet to its original state prior to encapsulation) and pass the traffic to another virtual device in the environment 120. Thus, devices in an environment 120 may communicate as if they connected within a physical LAN, even when geographically distant. A variety of techniques for implementing virtual networks between computing devices are known in the art and thus will not be described in detail herein.

In general, virtual private environments 120 are configured and operate on behalf of an individual user or set of users (e.g., an organization). In addition, the hosted computing environment 110 includes a number of additional services generally accessible by users. For example, the environment 110 includes an on-demand code execution system 130 enabling on-demand execution of user-defined code. The on-demand code execution system 130 may also be referred to as a serverless computing system. Embodiments for providing an on-demand code execution system 130 are provided, for example, in U.S. Patent No. 9,323,556, entitled "PROGRAMMATIC EVENT DETECTION AND MESSAGE GENERATION FOR REQUESTS TO EXECUTE PROGRAM CODE," and filed September 30, 2014 (the "'556 Patent"), the entirety of which is hereby incorporated by reference. In brief, the on-demand code execution system 130 can enable client devices 102 to submit executable code (e.g., source code) implementing desired functionality, which functionality is generally referred to herein as a "task." The system 130 can further enable a client device 102 to define one or more triggers that result in execution of the code on the system 130. For example, a client device 102 may request that each time a specific application programming interface (API) call is made, the code should be executed on the system 130. When a trigger occurs, the system 130 can configure an execution environment 132 for the code, which may correspond to a virtual machine instance, a software container, or other logically isolated environment in which code can execute. The system 130 can then execute the code within the environment 132, resulting in a task execution 134. When the task execution 134 completes, the system 130 can remove the environment 132, thus freeing computing resources for other task executions. The system 130 can thus enable a client device 102 to execute user-defined code on the system 130, without requiring the user to handle aspects of execution such as acquiring a computing device, provisioning the device with the code, etc.

In accordance with embodiments of the present disclosure, the execution environment 132 of FIG. 2 are further depicted as including a pooling interface 136. Generally described, the pooling interface 136 can represent code executing within an execution environment 132 and enabling a task execution 134 in that environment to interface with a connection manager service 150 (described in more detail below). In one embodiment, the pooling interface 136 corresponds to code executed within an environment 132 of a task execution 134, which can be interfaced with in a manner similar to the service for which a connection pool is implemented (e.g., the database instance 122). For example, where the database instance 122 is a MYSQL^{™} database accessed via a transmission control protocol (TCP) server, the pooling interface 136 can act as a proxy for the MYSQL TCP server, by implementing a corresponding TCP server that accepts transmissions in a manner similar or identical to that of the MYSQL TCP server. As will be described in detail below, on receiving a communication from a task execution 134, the pooling interface 136 may encapsulate the transmission with additional information enabling appropriate handling of the transmission on within the environment 110, and submit the encapsulated transmission to the connection manager service 150 for eventual delivery to the database instance 122.

Use of a pooling interface 136 may illustratively simplify generation of tasks by client devices 102, by simplifying code that must be authored by a user. For example, each task execution 134 may result in a corresponding pooling interface 136 being implemented by the system 130, creating a one-to-one correspondence between task execution 134 and pooling interface 136. This correspondence can enable each task execution 134 to locally reference a respective pooling interface 136 for that execution 134, such that the execution 134 need to be programmed to rely on external services to interface with a database instance 122. For example, code of a task may be configured to interact with a database at a "localhost" address, thus giving the appearance (from the point of view of a task execution 134) that a database exists locally. As discussed below, the pooling interface 136 may also facilitate authentication to a connection pool for the instance 122, further simplifying code for a task.

In one embodiment, code implementing the pooling interface 136 is provided by an operator of the on-demand code execution system 130, and may be associated with a task by inclusion of a reference to such code within user-defined code for a task. In this manner, the pooling interface 136 may be considered a "dependency" for a task, such that each task execution 134 results in execution of a corresponding the pooling interface 136. Implementation of task dependencies on an on-demand code execution system is discussed in more detail in U.S. Patent Application No. 15/841,143, entitled "DEPENDENCY HANDLING IN AN ON-DEMAND NETWORK CODE EXECUTION SYSTEM," the entirety of which is incorporated by reference herein.

While execution environments 132 are depicted as within the on-demand code execution system 130, in some instances the system 130 may be configured to create and manage such environments 132 within a virtual private environment 120 (e.g., when executing a task owned by an owner of that environment 120). The environment 120 in which a task is executed may differ from the environment 120 in which a network-accessible service accessed by the task is hosted.

To facilitate interaction with the hosted computing environment 110, the environment 110 further includes an authentication service 140 enabling client devices 102 to authenticate to services within the environment 110, such as to create virtual private environments 120 or devices within the environments 120, to create or trigger tasks on the on-demand code execution system 130, and the like. Authentication services 140 are known in the art, and thus operation of the service 140 will not be described in detail herein. However, in brief, a client device 102 may authenticate to the service 140 using a set of authentication information (e.g., a username and password), and the authentication service 140 may return other authentication information, such as an authentication token, to the client 102. The authentication token may then be provided from the client device 102 to other devices to authenticate the client device 102 to the other devices (which devices may verify the token by, for example, passing the token to the service 140 for verification). Services implemented on behalf of a client device 102, such as a database instance 122 or task execution 134 may be authenticated with the authentication service 140 on initiation within the environment 110. For example, a task execution 134 occurring at the request of the client device 102 may be provided, on initialization, with an authentication token identifying the task execution 134 as executing on behalf of the client device 102.

In accordance with embodiments of the present disclosure, the hosted computing environment 110 further includes a connection manager service 150 configured to provide connection pools to services on the environment 110, such as a database service provided by the database instance 122. Each connection pool is provided by one or more connection proxies 154, each of which illustratively represents a computing device configured to receive network traffic on behalf of a network service (e.g., the database instance 122) and to transmit the traffic to the network service over a fixed number of connections to the service. In one embodiment, connection proxies 154 may each be "single-tenanted" and configured to provide a connection pool to a single network service. In another embodiment, connection proxies may be "multi-tenanted" and configured to provide connection pools for multiple services. In some cases, single tenanted proxies 154 may be preferable for their increased security. For example, a proxy 154 providing a connection pool for the database instance 122 may be configured to interact with the instance 122 as if the proxy 154 were part of the virtual private environment 120. Single-tenancy may help to ensure that only appropriate traffic is routed to that environment 120 (which may occur, for example, if a multi-tenanted proxy 154 transmitted traffic to the incorrect environment 120, such as due to misconfiguration or malicious traffic).

To assist in routing traffic to the connection proxies 154, the connection manager service 150 further includes a connection router 156 implementing a "routing layer" for the service 150. The connection router 156 illustratively acts as a known endpoint for services to attempt to communicate with a connection proxy 154. On receiving traffic relate to a specific connection pool, the connection router 156 can identify one or more proxies 154 providing the pool and pass the traffic to the proxies 154. In some instances, the connection router 156 may authenticate traffic before passing the traffic to a proxy 154.

Still further, the connection manager service 150 includes a configuration interface 152. The interface 152 may provide a "control plane" for the connection manager service 150, enabling client devices 102 to create, configure, and delete connection pools for services. For example, the interface 152 may enable a client device 102 to create a connection pool for the database instance 122, and to specify to the connection manager service 150 configuration information for the pool, such as an identifier of the instance 122, authentication information to be used to access the instance 122, and a number of maximum connections to the instance 122.

As shown in FIG. 1, the hosted computing environment 110 further includes a secrets manager service 160, configured to securely store confidential information, such as authentication information. Illustratively, the secrets manager service 160 may provide a centralized location for a user to store sensitive information, such that any changes to that information (e.g., rotating a password), auditing of information, and the like need only occur at a single location.

In accordance with embodiments of the present disclosure, the secrets manager service 160 may be configured by a client device 102 to store authentication information for a service associated with a connection pool, such as the database instance 122. Connection proxies 154 can be configured to securely interact with the secrets manager service 160 to obtain the authentication information prior to connecting to the database instance 122, and to append that authentication information to traffic received at a connection pool as appropriate to enable the traffic to interact with the instance 122. Thus, use of connection proxies 154 and secretes manager service 160 can enable other services, such as task executions 134, to access the database instance 122 without requiring the services to themselves store authentication information for the database instance 122. In one embodiment, services, such as task executions 134, authenticate to the connection manager service 150 based on authentication information passed to the service at a time of initialization. For example, when a task execution 134 is triggered on behalf of a client device 102, an authentication token can be passed to the execution 134, which the execution 134 can use to authenticate with the connection manager service 150. The service 150, in turn, can retrieve authentication information for the database instance 122 from the secrets manager service 160 and use that authentication information to enable communications between the task execution 134 and the database instance 122. The task execution 134 therefore need not store the authentication information, increasing security of the database instance 122.

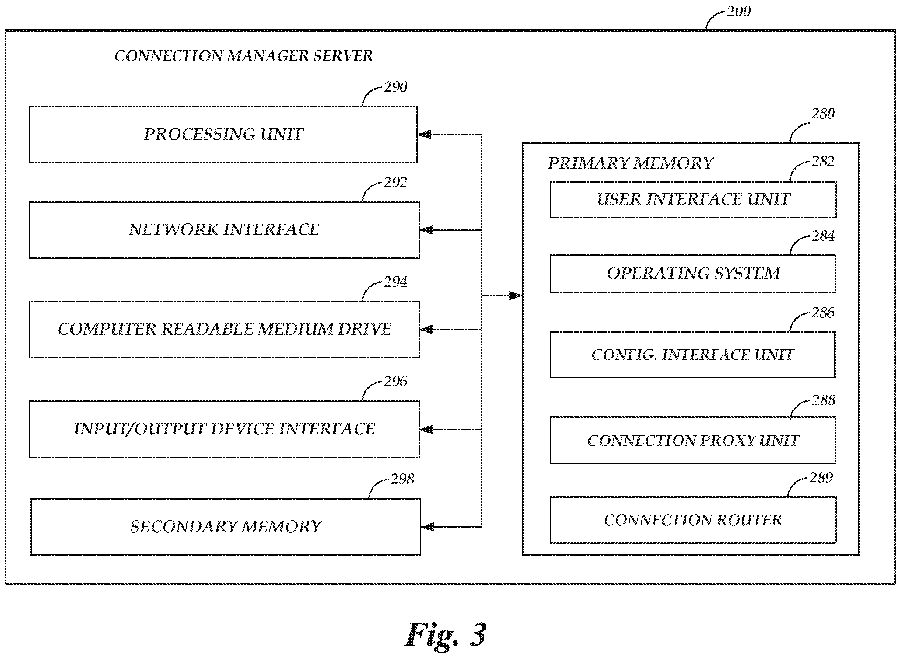

FIG. 3 depicts a general architecture of a computing system (a connection manager server 200) implementing the connection manager service 150 of FIG. 12 The general architecture of the server 200 depicted in FIG. 3 includes an arrangement of computer hardware and software that may be used to implement aspects of the present disclosure. The hardware may be implemented on physical electronic devices, as discussed in greater detail below. The server 200 may include many more (or fewer) elements than those shown in FIG. 3. It is not necessary, however, that all of these generally conventional elements be shown in order to provide an enabling disclosure. Additionally, the general architecture illustrated in FIG. 3 may be used to implement one or more of the other components illustrated in FIG. 2.

As illustrated, the server 200 includes a processing unit 290, a network interface 292, a computer readable medium drive 294, and an input/output device interface 296, all of which may communicate with one another by way of a communication bus. The network interface 292 may provide connectivity to one or more networks or computing systems. The processing unit 290 may thus receive information and instructions from other computing systems or services via the network 104. The processing unit 290 may also communicate to and from primary memory 280 and/or secondary memory 298 and further provide output information for an optional display (not shown) via the input/output device interface 296. The input/output device interface 296 may also accept input from an optional input device (not shown).

The primary memory 280 and/or secondary memory 298 may contain computer program instructions (grouped as units in some embodiments) that the processing unit 290 executes in order to implement one or more aspects of the present disclosure. These program instructions are shown in FIG. 3 as included within the primary memory 280, but may additionally or alternatively be stored within secondary memory 298. The primary memory 280 and secondary memory 298 correspond to one or more tiers of memory devices, including (but not limited to) RAM, 3D XPOINT memory, flash memory, magnetic storage, and the like. The primary memory 280 is assumed for the purposes of description to represent a main working memory of the server 200, with a higher speed but lower total capacity than secondary memory 298.

The primary memory 280 may store an operating system 284 that provides computer program instructions for use by the processing unit 290 in the general administration and operation of the server 200. The memory 280 may further include computer program instructions and other information for implementing aspects of the present disclosure. For example, in one embodiment, the memory 280 includes a user interface unit 282 that generates user interfaces (and/or instructions therefor) for display upon a computing device, e.g., via a navigation and/or browsing interface such as a browser or application installed on the computing device.

In addition to and/or in combination with the user interface unit 282, the memory 280 may include a configuration interface unit 286, a connection proxy unit 288, and a connection router unit 289, each of which represents code executable to implement a configuration interface 152, connection proxy 154, and connection router 156 of FIG. 3, respectively.

The server 200 of FIG. 3 is one illustrative configuration of such a device, of which others are possible. For example, while shown as a single device, a server 200 may in some embodiments be implemented as multiple physical host devices. **In** other embodiments, the server 200 may be implemented as one or more virtual devices executing on a physical computing device. While described in FIG. 3 as a server 200, similar components may be utilized in some embodiments to implement other devices shown in the environment 100 of FIG. 3.

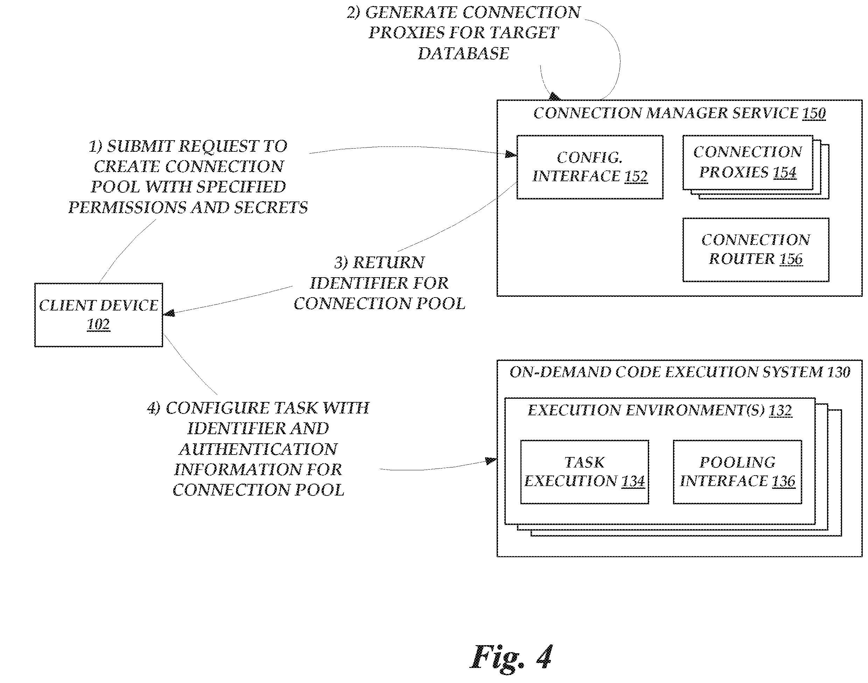

With reference to FIG. 4, illustrative interactions will be described for configuring the connection manager service 150 to provide a connection pool for a connection-limited service, such as the database instance 122. The interactions begin at (1), where a client device 102 submits to the configuration manager 152 a request to creation a connection pool for the instance 122. The request may include information pertaining to how the connection pool interacts with the instance 122. For example, the request may include a maximum number of connections to the instance 122 and an identifier of a secret (e.g., as stored on the secrets manager service 160) to use to access the instance 122. In addition, the request may specify how other devices may access the connection pool. For example, the request may specify permissions for the connection pool, such as an account, identity, or "role" (also referred to herein as an "authentication role") with permissions to access the connection pool. In some instances, the request may further specify information relating to a format of communications flowing through the connection pool, such as a wire protocol used by the database instance 122. Illustratively, knowledge of the wire protocol used by the database instance 122 may enable the connection manager service 150 to more accurately detect a state of a connection flowing through the pool (e.g., as active or idle). For example, specific wire protocols (such as commonly used database wire protocols) may include commands indicative of an active (or idle) connection, and thus the connection manager service 150 may be configured to inspect communications across the connection pool to determine whether a connection between a source device (e.g., a service requesting access to the connection pool) and the database instance 122 is active or idle.

On receiving the request, the connection manager service 150, at (2), generates one or more connection proxies 154, which operate to provide the connection pool. Illustratively, the connection manager 150 may generate a virtual computing instance and provision the instance with software enabling the instance to accept connections from source devices and pass queries (or other data) received from source devices to the database instance 122 in accordance with embodiments of the present disclosure. In one embodiment, the connection proxies 154 are generated by the service 150 such that they are enabled to communicate with the instance 122. For example, the service 150 may include the proxies 154 in the virtual private environment 120 of the instance 122 or otherwise modify the environment 120 to enable communications from the proxies to reach the instance 122.

At (3), the configuration interface 152 returns to the client device 102 an identifier for the connection pool, which identifier may thereafter be used by source services to access the database instance 122 via the connection pool. In one embodiment, the identifier is a globally or universally unique identifier (a "GUID" or "UUID"). In another embodiment, the identifier is unique to an account of the client device 102 on the hosted computing environment 110, and a combination of an account identifier of the account and the identifier of the connection pool form a globally unique identifier.

While the client device 102 may thereafter configure any number of (appropriately authenticated) services to access the instance 122, connection pooling may be particularly beneficial in rapidly scalable and/or transient source services, such as services provided by task executions 134 on the on-demand code execution system 130. Thus, FIG. 4 depicts interactions enabling such a task execution 134 to access the database instance 122 through the connection pool provided by the service 150.

Specifically, at (4), the client device 102 interacts with the on-demand code execution system 130 to configure a task (e.g., the code that when executed results in task execution 134) with the identifier of the connection pool, as well as specifying an account, identifier, or role for the task that enables the task to connect to the connection pool. The identifier and role information may be stored as metadata associated with the task, rather than within user-defined code for the task. Thus, modification of a connection pool identifier and/or role may not require modification of the user-defined code. When executing a task, the system 130 may, in addition to executing the user-defined code as a task execution 134, implement a pooling interface 136 within an environment 132 of the task, and configure the pooling interface 136 to include an identifier of the task. The pooling interface 136 may be provided with authentication information for the user-specified role, such that the interface 136 can provide the authentication information to the service 150 to authenticate itself. Thereafter, the pooling interface 136 may operate to receive communications from the task execution 134, and to submit them to the service 150 in an authenticated manner that also identifies the connection pool.

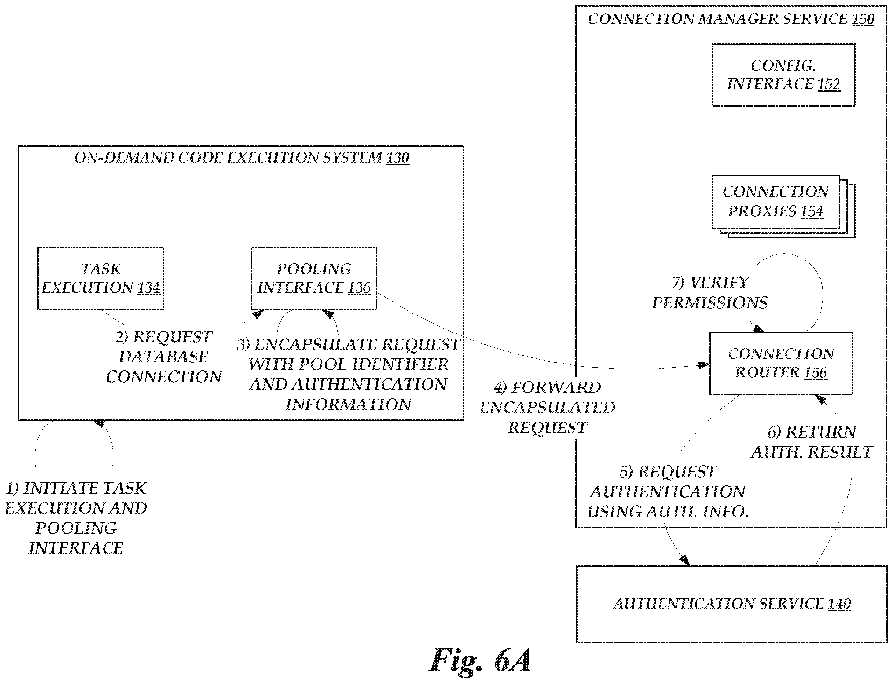

For example, as will be described in more detail below with respect to FIG. 6A, the pooling interface 136 may represent a TCP server that receives network transmissions from the task execution 134 according to a wire protocol also used by the database instance 122. On receiving such a transmission, the interface 136 may encapsulate the transmission with additional information, such as authentication information and an identifier of the connection pool, and transmit the encapsulated transmission to the connection service 150 (e.g., to a router 156). The service 150 may utilize the additional information to authenticate the transmission, and to route the request to an appropriate connection proxy 154. The proxy 154 may then decapsulate the transmission and pass the transmission to the database instance 122. Thus, from the perspective of the user-defined code executing as the task execution 134, database queries may be submitted to a local endpoint (the interface 136), without requiring authentication and without apparent reliance on external services. This model therefore greatly simplifies creation of tasks, and enables high scalability of tasks on the system 130.

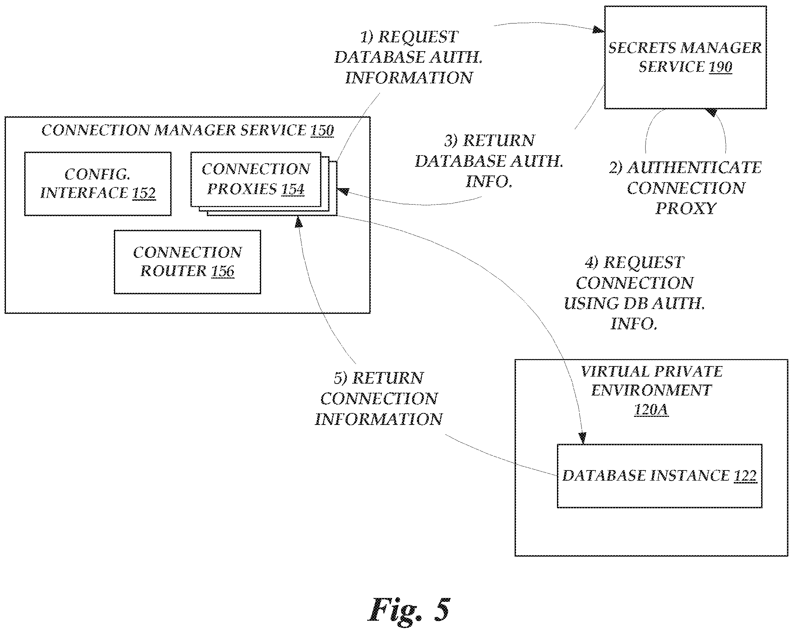

With reference to FIG. 5, illustrative interactions will be described securely initiating connections between a connection pool provided by the connection manager service 150 of FIG. 1 and a network-based service to which the pool provides access (e.g., the database instance 122). As discussed above, a connection pool implemented by connection proxies 154 may facilitate interaction with the database instance 122 by enabling source devices to submit queries to the pool, which are then passed to the instance 122 via an idle connection between the pool and the instance 122. Thus, the interactions of FIG. 5 can enable a connection proxy 154 to create a secure connection to the instance 122. In one embodiment, the interactions of FIG. 5 occur at initialization of the connection pool. For example, where the pool is configured to provide *n* connections to the instance 122, the proxies 154 providing the pool may establish those connections on initialization, such that subsequent attempts to transmit information to the instance 122 can utilize the pre-established connections. In another embodiment, the interactions of FIG. 5 occur on an as-needed basis. For example, the proxies 154 of a pool may establish a connection to the instance 122 when there is no existing idle connection to the instance 122. In some embodiments, the interactions of FIG. 5 may occur both on initialization of a proxy 154 and on an as-needed basis. For example, a pool may be configured with both a minimum and maximum number of connections to a service, such as the database instance 122. On initialization, a proxy 154 hosting a pool may undertake the interactions of FIG. 5 in order to establish the specified minimum number of connections for the pool. Thereafter, the proxy 154 may repeat the interactions of FIG. 5 on an as-needed basis, until the maximum number of connections is reached.

For the purposes of description, it will be assumed that the database instance 122, like many network-accessible services, requires clients to authenticate with the instance 122 prior to establishing a connection. Rather than storing authentication information for the instance 122 at the service 150, a user may elect to store such information in a secure, centralized location, like that provided by the secrets manager service 160. Thus, prior to establishing a connection to the instance 122, the proxies 154 providing a pool can interact with the secrets manager service 160 to obtain authentication information for the instance 122.

Specifically, at (1), the proxies 154 request the authentication information from the secrets manager service 160. At (2), the service 160 authenticates the requesting proxies 154. In one embodiment, the service 160 may authenticate the proxies 154 based on an authentication token provided to the proxies 154 on initialization. For example, when creating a connection pool, a client device 102 may specify an identity or "role" to be assumed by devices providing the pool. On initialization, proxies 154 may be provided with authentication information (e.g., a token) identifying their use of that role, which information may be passed to the secrets manager service 160. The service 160 may then authenticate the proxies 154 using the provided information (e.g., by passing the token to the authentication service 140 and requesting verification of the token). After authentication, the service 160, at (3), returns to the proxies 154 the authentication information for the database instance 122 (e.g., a username and password).

Thereafter, at (4), the proxies 154 utilize the authentication information for the database instance 122 to request a connection to the instance. Illustratively, the connection may be a MySQL protocol connection. The database instance 122 then, at (5), returns the connection information to the proxies 154, thus establishing a connection between the instance 122 and the one or more proxies 154 providing a connection pool for the instance 122. The connection may illustratively be encrypted to secure communications between the proxies 154 and the instance 122. For example, the connection may utilize transport layer security (TLS) (or its predecessor, secure sockets layer (SSL)). Moreover, the connection may logically occur within a virtualize network of the virtual private environment 120, further securing the connection.

While shown as two interactions in FIG. 5, various protocols may require additional interactions between the proxies 154 and the instance 122 to establish a connection. For example, particular wire protocols may define a multi-step "handshake" enabling the proxies 154 and instance 122 to exchange information for the connection. As will be described below, the connection between proxies 154 and the instance 122 may thereafter be used to pass queries from source services, such as task executions 154 to the instance 122. Notably, because authentication between the proxies 154 and instance 122 occurs independently of source services, the proxies 154 can also be viewed as "authentication proxies" for source services, allowing those services to utilize other authentication information (such as information gained by virtue of creation of the service on the hosted computing environment 110) to access the connection pool, while utilizing database-specific authentication information (e.g., from the secrets manager service 160) to connect to the instance 122.

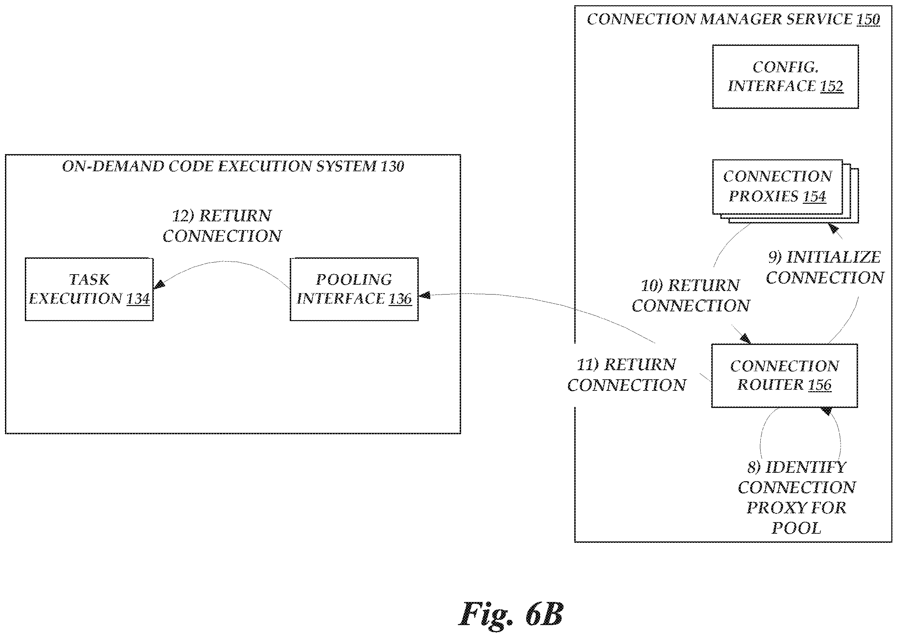

FIGS. 6A and 6B are flow diagrams depicting illustrative interactions for initiating a connection between the connection manager service 150 and a network-based service, such as the task execution 134 on the on-demand code execution system 130, attempting to utilize a connection pool provided by the connection manager service 150.

The interactions of FIG. 6A begin at (1), where the system 130 initiates the task execution 134. As discussed above, the task execution 134 generally represents execution of user-defined code, and can be triggered based on a variety of criteria monitored by the system 130. For example, the system 130 may initiate the task execution 134 based on a call received from a client device 102. In addition to initiating the task execution 134, the system 130 also initiates the pooling interface 136. In one embodiment, the system 130 initiates the pooling interface 136 based on a reference to the interface 136 within code of the task. For example, the user-defined task code (or metadata for the task) may contain an "include" statement referring to code of the pooling interface 136, thus causing the system 130 to execute the interface 136 along with the task. In one embodiment, the pooling interface 136 is executed in a common execution environment as the task, thus enabling the task to utilize a relative network identifier for the pooling interface 136, such as the "localhost" identifier. In another embodiment, the pooling interface 136 is executed in a separate execution environment. For example, the pooling interface 136 may be implemented as a "sidecar VM instance" as disclosed in U.S. Patent App. No. 16/017,970, entitled "EXECUTION OF AUXILIARY FUNCTIONS IN AN ON-DEMAND NETWORK CODE EXECUTION SYSTEM," the entirety of which is hereby incorporated by reference. Specifically, as disclosed in the '970 Application, a sidecar VM instance may be a separate virtual machine instance with a lifecycle ties to the execution environment for the task, such that a change in status of the execution environment (e.g., startup, shutdown, sleep, etc.) results in the same change of status of the sidecar VM.

At (2), the task execution 134 transmits to the pooling interface 136 a request to connect to the database 122. In one embodiment, because the task execution 134 utilizes the pooling interface 136 rather than attempting to directly connect to the database 122, the task execution 134 need not specifically identify the database 122 within the request. Moreover, because the connection manager service 150 is configured to authenticate calls to the database based on authentication information provided by the on-demand code execution system 130 in initiating the task execution 134, the task execution 134 need not specify authentication information for the database within the request. As such, the format of the request is greatly simplified. For example, where the task execution 134 represents executing Python code (e.g., formatted according to the Python 2.6 standard) and the database 122 is a MySQL database, the code may include a statement such as 'mydatabase = mysql.connector.connect(host="localhost", user="", passwd="")', where 'mydatabase' is a handle to the connection, "mysql.connector" is a MySQL-provided class containing functions related to MySQL databases, and the "connect" function is a function attempting to initiate a connection to a MySQL database, which function is passed a "host" variable identifying "localhost" as a location of the database, and "user" and "passwd" variables specifying no authentication information for the database. The request is illustratively transmitted via the TCP protocol to a TCP server implemented by the pooling interface 136.

While embodiments of the present disclosure may remove a need to specify an identifier of a connection pool within the request of interaction (2), in some instances it may be beneficial to enable that identifier to be specified by a task execution 134. For example, the on-demand code execution system 130 may enable a task to be associated with multiple network-accessible, connection-limited services, each accessible via a distinct connection pool. The system 130 may further provide a pooling interface 136 for each such pool. To facilitate distinguishing between interfaces 136 for the respective pools, the on-demand code execution system 130 may provide an API enabling resolution of an identifier of a given connection pool into access information for an interface 136 of the pool. For example, the system 130 may provide a function to a task such as "getPoolAddress" which takes as a parameter a pool identifier, and which when invoked returns a network address and port number of the interface 136 for that pool. Thus, a task may call the getPoolAddress function to obtain an address and port number for a given pool, and insert that address and port into the "host" field of a connect function (or similar database function) in order to request a database connection from the pooling interface 136. Notably, connecting to a service in this embodiment may require only specification of an identifier of the service within code of the task, without requiring, for example, authentication information of the service or knowledge of a network location at which the service is implemented to be hard-coded within task code.

On receiving the request, at (3), the pooling interface 136 adds to the request additional information to be utilized by the connection manager service 150 in routing and processing the request. Specifically, the service 150 adds information specifying at least an identifier for the connection pool of the database instance 122 and authentication information to be used by the service 150 to authenticate the request. Both of the above-noted items of information may be supplied to the pooling interface 136 by the system 130, such as on initialization of the interface 136. For example, as discussed above, a client device 102 may configure a task with metadata specifying a role of the task and an identifier of a connection pool for the database instance 122. Thus, on initiating the task execution 134, the system 130 may pass the identifier and an authentication token (or other authentication information) to the interface 136. In one embodiment, the pooling interface 136 adds the above-noted information by use of network encapsulation techniques, by encapsulating the original request (e.g., in the form of a TCP packet) with an additional header specifying the above-noted information. Use of encapsulation may beneficially reduce or eliminate the need to modify the packet as transmitted by the task execution 134.

At (4), the pooling interface 136 forwards the encapsulated request to the connection router 156. As noted above, the router 156 can generally function to authenticate transmissions from pooling interfaces 136, and to route those transmission to a connection proxy 154 providing a connection pool for a service, such as the database instance 122.

Accordingly, at (5), the connection router 156 requests from the authentication service 140 authentication of the pooling interface 136 based on the authentication information provided by the interface 136 within the request. For example, the connection router 156 may submit to the authentication service 140 a request to validate an authentication token provided by the pooling interface 136. The authentication service 140, at (6), evaluates the authentication information and returns an authentication result to the connection router 156. Illustratively, the authentication service 140 may verify or determine a role associated with the authentication token, and notify the connection router 156 that the interface 136 is authenticated as that role.

In addition, the router 156, at (7), verifies that the role to which the interface 136 has been authenticated has permissions to access the connection pool identified within the request (e.g., based on permissions for the pool specified by a client device 102). Should authentication of verification of permissions fail, the router 156 can notify the interface 136 of the failure, which may for example generate an error within a log of the task execution 134. However, for the purposes of description of FIGS. 6A-B, it will be assumed that the authentication result indicates successful authentication of the pooling interface 136, and that the router 156 verifies that the role of the interface 136 has appropriate permissions to access the connection pool for the database instance 122.

The interactions of FIG. 6A are continued in FIG. 6B, where, at (8), the connection router 156 identifies a connection proxy 154 providing a connection pool for the database instance 122. In one embodiment, the connection router 156 may maintain a mapping of identifiers to proxies 154, such as in a data store of the connection manager service 150. In cases where the pool is provided by multiple proxies 154, the router may in some embodiments select between the proxies 154 based on load balancing criteria. In another embodiment, the connection router 156 may utilize the domain name system (DNS) to identify the connection proxy 154. For example, each connection proxy 154 providing a given pool may register with a DNS server (not shown in FIG. 6B) to associate an address of the proxy 154 to a domain name corresponding to an identifier of the connection pool (e.g., "poolID.connectionmanagerservice.hostedenvironment.tld"). The router 156, on receiving a request, may thus generate the domain name based on the identifier, and interact with a DNS server to resolve the domain name into a network address of a proxy 154 providing the identified connection pool. The DNS server may, instances where a pool is provided by multiple proxies 154, conduct DNS-based load balancing, such as by resolving a domain name of the connection pool into an address of one or more proxies 154 selected based on their load.

On identifying a proxy 154 providing the identified connection pool, the router 156 initializes a connection with the proxy 154, at (9). The proxy 154, in turn, responses to the router 156 indicating a successful connection. The router 156 thus indicates a successful connection to the interface 136, which indicates a successful connection to the task execution 134. In one embodiment, each of the connections between the respective task execution 134, interface 136, router 156 and proxy 154 is an encrypted connection, such as a TLS-compliant TCP connection. In some instances, additional interactions, such as multi-phase handshake, may occur between these components during establishment of a connection.

While FIGS. 6A and 6B are described with respect to specific mechanisms of augmenting a request for a network service at a pooling interface 136, embodiments of the present disclosure may be utilized to augment service requests (e.g., requests for operations) with a variety of information. For example, in addition to authentication information, requests may be augmented with a variety of types of state information for a task execution 134, which may vary during a task execution or across executions. Such state information may include, e.g., permissions information for a task execution (e.g., network resources to which the execution has access permissions), a current real (e.g., "wall clock") time as maintained at the execution, a running time of the execution, a network location of the execution, etc. In addition to an identifier of a connection pool, requests may additionally or alternatively be augmented with a variety of types of metadata, any of which may be specified by an owner of a task during configuration of the task on the system 130. By augmenting requests with state information and/or metadata, the need to hard-code such information into code of the task is reduced or eliminated. Moreover, by utilizing a pooling interface 136 to augment requests, such as via encapsulation, the code of the task may remain compatible with existing libraries or code packages not necessarily intended for use in the system 130 (e.g., code or libraries that expect a particular wire protocol, which may be intended for use within a local network, use outside a connection manager service 150 or on-demand code execution system 130, etc.). Thus, portability of code is increased relative to conventional techniques.

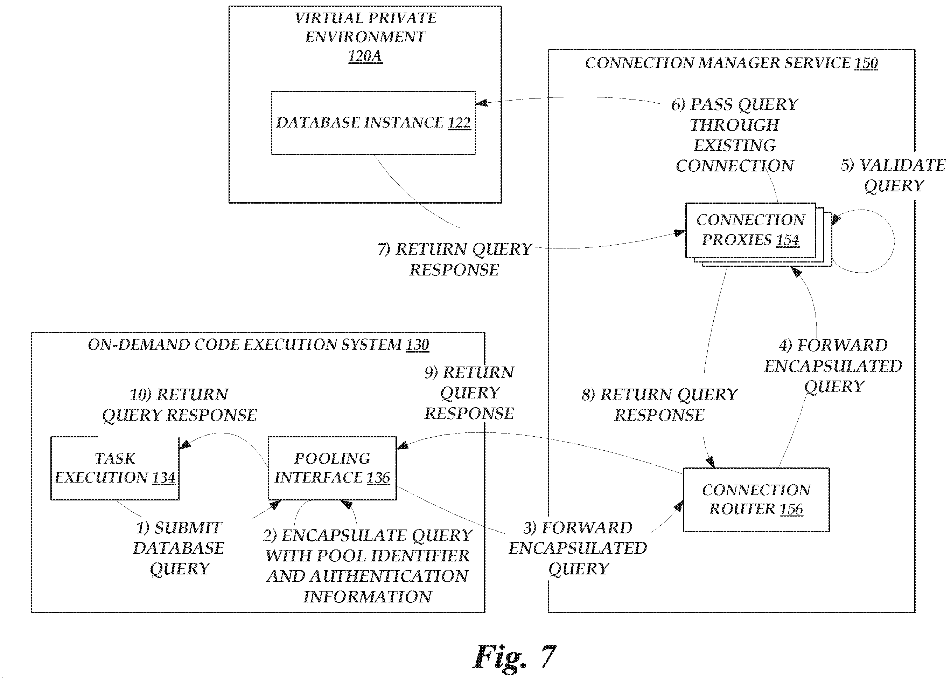

FIG. 7 is a flow diagram depicting illustrative interactions for securely communicating between a first and second network-based service (e.g., the system 130 hosting the task execution 134 and the database instance 122) utilizing a connection pool provided by the connection manager service 150 of FIG. 1. The interactions of FIG. 7 are assumed for purposes of discussion to occur subsequent to connections being established between the elements of FIG. 7 (e.g., the execution 134 and the interface 136, the interface and the router 156, etc.). Thus, at (1), the task execution 134 submits a database query to the pooling interface 136 via the connection. Submission of the query may correspond for example, to execution of a statement in code such as 'mydatabase.cursor().execute("SHOW TABLES")', where "mydatabase" is a handle to a MySQL database connection, "cursor()" is a function that returns a "MySQLCursor" class object that executes operations against a database, and "execute" is a function that instructs to execute the operation passed to that function (e.g., "SHOW TABLES," an SQL command to list tables in a database). While FIG. 7 is discussed with respect to queries, a task execution 134 may execute any number of operations against a database.

At (2), on receiving the request from the task execution 134, the pooling interface 136 adds to the query an identifier of the connection pool for the database 122 and authentication information of the task execution 134. As noted above, both of the above-noted items of information may be supplied to the pooling interface 136 by the system 130, such as on initialization of the interface 136. In the embodiment shown in FIG. 7, the interface 136 adds the information by encapsulating the query (e.g., as received in the form of a TCP packet) with a new header specifying the information.

At (3), the interface 136 transmits the encapsulated query to the connection router 156, which at (4) forwards the query to the proxy 154 identified as providing the connection pool identified within the request (e.g., identified according to the interactions of FIG. 6A and 6B, discussed above).

At (5), the proxy 154 validates the query, by confirming that the pool identified within the encapsulated query matches a pool provided by the proxy 154. **In** some embodiments, validation at the proxy 154 may be omitted, as the router 156 is expected to pass queries only to a proxy 154 providing a connection pool identified within a request. However, additional verification at the proxy 154 may increase security of the service 150. In instances where no validation occurs at the proxy 154, the router 156 may decapsulate the query and transmit the query to the proxy 154 in decapsulated form.

At (6), the proxy 154 decapsulates the query (if necessary), and transmits the query to the instance 122 via an existing connection to the instance 122. (In the case that no existing connection to the instance 122 is in an idle state, the proxy 154 may initiate a new connection to the database, such as by the interactions of FIG. 5, discussed above.) As noted above, by using an existing connection to the instance 122, a set of connections to the instance 122 may be "oversubscribed," enabling more services (e.g., task executions 134) to maintain (from their point of view) connections to the instance 122 than the instance 122 would be able to support without use of a connection pool.

At (7), the instance 122 executes the query to generate a response, which is returned to the proxy 154. The proxy 154, in turn, returns the response to the router 156 at (8), which returns the response to the interface 136 at (9), which returns the response to the execution, at (10). Thus, the execution 134 is enabled to submit operations to the instance 122 and obtain a result of that operation.

In one embodiment, the proxy 154 transmits the query to the instance 122 by utilizing a virtual network of the virtual private environment 120A, such that (from the point of view of the instance 122) the query appears to originate within the environment 120A. As noted above, the task execution 134 may submit the query to the interface 136 within a common execution environment (e.g., at a "localhost" address). Thus, the appearance of a local client-database connection is provided to both the task execution 134 and database instance 122, despite these services existing in disparate and potentially otherwise isolated networks.

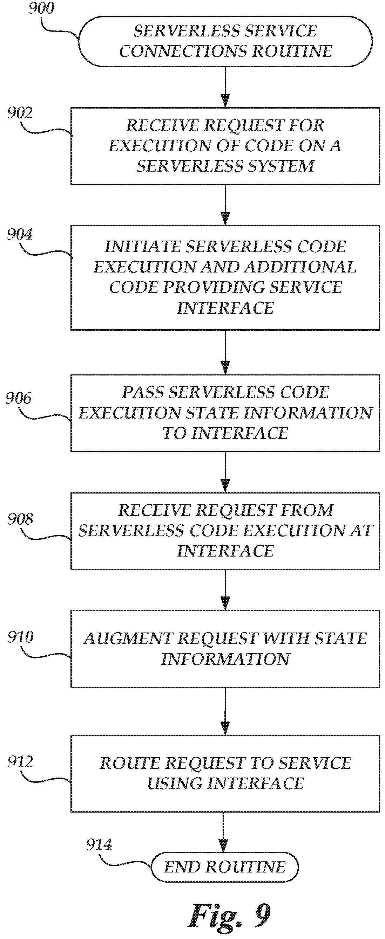

The above-described interactions provide a number of benefits over prior approaches. For example, as discussed above, these interactions enable a connection manager service to provide multiple connection pools associated with multiple services, even when such services exist within isolated network environments (e.g., virtual private environments 120), and to route requests to such pools based on identifiers of the pools. These interactions further enable simplification of tasks on an on-demand code execution system, by enabling use of a pooling interface 136 that can append additional information to requests received from task executions, such as authentication information and an identifier of the service, thus enabling the task execution to make requests to a service without specifying this information. These interactions further enable authentication of hosted services based on a pre-existing authentication scheme of the hosted service, by utilizing authentication information provided by a hosting system to authenticate the hosted service to another network service (which may utilize a different authentication scheme). FIGS. 9-11 depict illustrative routines that may be implemented by elements of the environment 100 to provide these benefits.

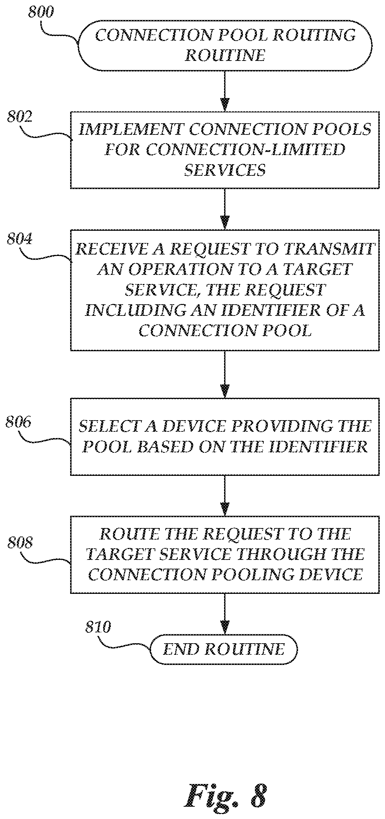

Specifically, FIG. 8 depicts a connection pool routing routine 800, which may be used to provide connection pools for connection-limited services, and to route requests to those pools based on an identifier of the pool. The routine 800 may be implemented, for example, by the connection manager service 150.

The routine 800 begins at block 802, where the connection manager service 150 implements connection pools for connection-limited services. Illustratively, each connection pool may be implemented by one or more connection proxies 154. Where the connection-limited services exist within isolated environments, the proxies 154 can be configured to access the isolated environments.

At block 804, the connection manager service 150 receives a request to transmit an operation to a target network service, the request including an identifier of the connection pool. Illustratively, the request may be received at a connection router 156 of the connection manager service 150. In one embodiment, the request may include the identifier as a header of an encapsulated data packet, the encapsulated portion of which corresponds to a wire protocol of the target network service. For example, the encapsulated portion may conform to a particular database protocol when the target network service is a database service.

At block 806, the connection manager service 150 selects a device providing a pool for the target network service, based on the identifier as included within the request. Illustratively, the connection manager service 150 may utilize DNS to map the identifier to a network address of a proxy 154 providing a pool for the service. In some instances, the connection manager service 150 may apply load balancing criteria to select from multiple proxies 154 providing a pool for the service.

At block 808, the connection manager service 150 routes the request to the target service through the selected device. Illustratively, the connection manager service 150 may pass the request to the device through a first network connection, and the device may then pass the request to the service via a pre-existing network connection (or, of no idle pre-existing connection exists, may create an additional connection to the network service.

The routine 800 then ends at block 810.

FIG. 9 depicts a serverless service connections routine 900, which may be utilized to enable serverless code executions (e.g., task execution 134) to connect to network-accessible services, without requiring information for the service (such as an identifier of the service, or metadata of the task, authentication information, or other state information of the task execution) to be hard-coded into user-defined code. The routine 900 may be implemented, for example, by the on-demand code execution system 130.

The routine 900 begins at block 902, where the on-demand code execution system 130 obtains a request to execute code on the serverless system. The request may be obtained, for example, based on an API call from a client device 102, detection of a pre-defined trigger condition on the system 130, etc.

At block 904, the on-demand code execution system 130 initiates execution of the serverless code (e.g., a task execution). For example, the system 130 may identify or generate an execution environment, such as a virtual machine instance or software container, for the code, provision the environment with the code, and execute the code within the environment. In addition to the code, the on-demand code execution system 130 further executes additional code providing a service interface for a target network-accessible service. The service interface may for example correspond to a TCP server accessible to the serverless code via a relative identifier (e.g., the "localhost" network address). In one embodiment, the service interface is implemented in the same execution environment as the serverless code.

At block 906, the on-demand code execution system 130 passes execution state information to the interface. The execution state information may illustratively be any information regarding the task execution as implemented on the on-demand code execution system 130, such as authentication information of the execution (e.g., an authentication token indicating that the task was executed by the system 130 in an authorized state), permissions information indicating resources to which the execution has access permissions, a current time as maintained at the task execution, etc.. In some embodiments, additional data may be passed to the interface, such as service metadata for the serverless code. The service metadata may be defined by a user of the on-demand code execution system 130 when configuring serverless code, such that the metadata is modifiable independent of the user-defined code. Service metadata may include, for example, an identifier of a connection pool for a service.

At block 908, on-demand code execution system 130 receives a request to access the service from the serverless code at the interface. For example, the system 130 may obtain a local TCP data packet addressed to the interface.

At block 910, the on-demand code execution system 130, via operation of the interface, augments the request with state information, thus enabling a downstream component to obtain the state information without requiring the task execution to be hard-coded to provide such information. In one embodiment, augmenting the request may include encapsulating the request with a header including the state information. Use of encapsulation may be beneficial, for example, in allowing a wire protocol format of the initial request to be maintained. For example, encapsulation of the request by an interface may reduce or eliminate the need for use of custom libraries or functions within a task execution, instead enabling the task to utilize standard libraries or functions (e.g., those intended to access a local service or a service not associated with a connection manager service 150).

At block 912, the on-demand code execution system 130 routes the augmented request to the service using the interface. Illustratively, the interface may transmit the request to a router configured to route the request based on state information, such as by first authenticating the request based on an authentication token with which the request has been augmented at the interface.

The routine 900 then ends at block 914.

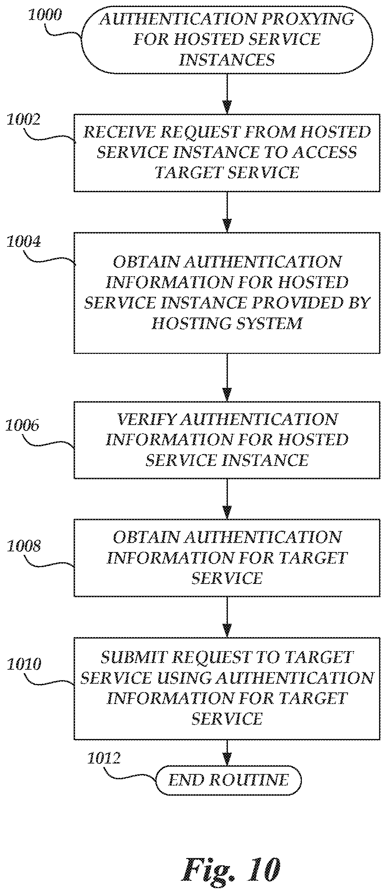

FIG. 10 depicts a routine 1000 providing authentication proxying for hosted service instances, which may be utilized to enable hosted service instances to utilize one set of authentication information (e.g., providing by a hosting system for the hosted service) to authenticate to other services utilizing other authentication information (e.g., a database service using a username and password), without requiring that the hosted service directly store the other authentication information. The routine 1000 may be implemented, for example, by the connection manager service 150.

The routine 1000 begins at 1002, where the service 150 obtains a request for a hosted service instance to access a target service. The hosted service instance may correspond, for example, to a task execution on the on-demand code execution system 130.

At block 1004, the service 150 obtains authentication information for the hosted service instance provided by a hosting system for the hosted service instance. For example, where the hosted service instance is a task execution on the on-demand code execution system 130, the service 150 may obtain authentication information for the task execution from the system 130. In some instances, the service 150 may query the hosting system for authentication information. In another embodiment, the authentication information may be included within the request (e.g., as a field of a header of the request).

At block 1006, the service 150 verifies the authentication information for the hosted service instance. Illustratively, the service 150 may transmit the authentication information to an authentication service that authored the information, in order to verify its authenticity. In addition, the service 150 may obtain permissions for the target network service, and verify that the authentication information complies with such permissions (e.g., that the authentication information corresponds to a role that has permissions to access the service).

At block 1008, the service 150 obtains authentication information for the target service. The authentication information is illustratively stored separately from the hosted service instance and independently modifiable. For example, the authentication information for the target service may be stored within a secrets manager service.

At block 1010, the service 150 submits the request to the target service using the authentication information for the target service. For example, the service 150 may initiate a connection to the target service using the authentication information for the target service, and pass the request to the target service over that connection. In this manner, a hosted service instance may pass requests to a target service without requiring that the hosted service instance itself store authentication information for the target service.

The routine 1000 then ends at block 1012.

While illustrative routines are discussed above, various modifications or additions to these routines are possible and contemplated herein. For example, the routines of FIGS. 8-10 may be implemented in combination to provide the benefits described herein, as depicted in the interactions of FIGS. 4-7, above. Thus, the interactions of FIGS. 8-10 are intended to be illustrative and not exhaustive in nature.

All of the methods and processes described above may be embodied in, and fully automated via, software code modules executed by one or more computers or processors. The code modules may be stored in any type of non-transitory computer-readable medium or other computer storage device. Some or all of the methods may alternatively be embodied in specialized computer hardware.

Conditional language such as, among others, "can," "could," "might" or "may," unless specifically stated otherwise, are otherwise understood within the context as used in general to present that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Disjunctive language such as the phrase "at least one of X, Y or Z," unless specifically stated otherwise, is otherwise understood with the context as used in general to present that an item, term, etc., may be either X, Y or Z, or any combination thereof (e.g., X, Y and/or Z). Thus, such disjunctive language is not generally intended to, and should not, imply that certain embodiments require at least one of X, at least one of Y or at least one of Z to each be present.

Unless otherwise explicitly stated, articles such as 'a' or 'an' should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C.

Any routine descriptions, elements or blocks in the flow diagrams described herein and/or depicted in the attached figures should be understood as potentially representing modules, segments, or portions of code which include one or more executable instructions for implementing specific logical functions or elements in the routine. Alternate implementations are included within the scope of the embodiments described herein in which elements or functions may be deleted, or executed out of order from that shown or discussed, including substantially synchronously or in reverse order, depending on the functionality involved as would be understood by those skilled in the art.

## Claims

1. A computer-implemented method comprising:
receiving a transmission of an operation to a target network service (122) of a plurality of connection-limited, network-accessible services, the transmission including an identifier of a connection pool, from a plurality of connection pools, corresponding to the target network service (122), wherein each connection pool of the plurality of connection pools provides a pool of connections to a corresponding connection-limited, network-accessible service of the plurality of connection-limited, network-accessible services;
identifying a computing device (154) providing the connection pool based at least in part on the identifier of the connection pool; and
routing the transmission to the computing device (154) providing the connection pool;
wherein the computing device (154) providing the connection pool obtains the transmission,
interacts with a secrets manager service (190) storing authentication information for the target network service (122),
obtains, from the secrets manager service (190), the authentication information for the target network service (122) prior to connecting to the target network service (122),
appends the authentication information to the transmission, and
forwards the transmission to the target network service (122) through an existing connection to the target network service (122).

2. The computer-implemented method of Claim 1, wherein identifying a computing device (154) providing the connection pool based at least in part on the identifier of the connection pool comprises resolving the identifier of the connection pool into a network address of the computing device (154) utilizing a domain name service (DNS) server.

3. The computer-implemented method of Claim 1, wherein a set of computing devices provide the connection pool, and wherein identifying a computing device (154) providing the connection pool based at least in part on the identifier of the connection pool comprises applying load balancing criteria to identify the computing device (154) among the set of computing devices.

4. The computer-implemented method of Claim 1, wherein the transmission further includes authentication information of a source device, and wherein the method further comprises authenticating the source device using the authentication information prior to routing the transmission to the computing device (154) providing the pool.

5. The computer-implemented method of Claim 4, wherein the transmission includes a network packet identifying the operation encapsulated with a header including the authentication information of the source device.

6. The computer-implemented method of Claim 4, wherein the source device is a virtual computing device hosted on a hosted computing environment, and wherein the authentication information of the source device is provided to the virtual computing device by the hosted computing environment.

7. The computer-implemented method of Claim 1, wherein the target network service (122) is included within a virtual private network environment (120A), and wherein the method further comprises:
receiving a request to generate the connection pool corresponding to the target network service (122); and
configuring the computing device (154) to access the virtual private network environment (120A).

8. The computer-implemented method of Claim 1 further comprising:
receiving a response of the target network service (122) from the computing device (154) providing the connection pool; and
returning the response to a source device from which the transmission was received.

9. A system comprising:
a data store including computer-executable instructions; and
one or more processors configured to execute the computer-executable instructions to:
receive a transmission of an operation to a target network service (122) of a plurality of connection-limited, network-accessible services, the transmission including an identifier of a connection pool, from a plurality of connection pools, corresponding to the target network service (122), wherein each connection pool of the plurality of connection pools provides a pool of connections to a corresponding connection-limited, network-accessible service of the plurality of connection-limited, network-accessible services;
identify a computing device (154) providing the connection pool based at least in part on the identifier of the connection pool; and
route the transmission to the computing device (154) providing the connection pool;
wherein the computing device (154) providing the connection pool is configured to
obtain the transmission,
interact with a secrets manager service (190) storing authentication information for the target network service (122),
obtain, from the secrets manager service (190), the authentication information for the target network service (122) prior to connecting to the target network service (122),
append the authentication information to the transmission, and
forward the transmission to the target network service (122) through an existing connection to the target network service (122).

10. The system of Claim 9, wherein the target network service (122) is included within a virtual private network environment (120A), and wherein the one or more processors are further configured to:
receive a request to generate the connection pool corresponding to the target network service (122); and
configure the computing device (154) to access the virtual private network environment (120A).

11. The system of Claim 10, wherein the computing device (154) receives the transmission outside the virtual private network environment (120A) and forwards the operation to the target network service (122) through the virtual private network environment (120A).

12. The system of Claim 9, wherein the transmission includes a network packet encapsulated with a header including the identifier of the connection pool, and wherein the computing device (154) providing the connection pool is configured to decapsulate the network packet prior to forwarding the operation to the target network service (122).

13. The system of Claim 9, wherein the transmission further includes authentication information of a source device, and wherein the one or more processors are further configured to authenticate the source device using the authentication information prior to routing the transmission to the computing device (154) providing the pool.

14. The system of Claim 13, wherein the source device is a virtual computing device hosted by on a hosted computing environment, and wherein the authentication information of the source device is provided by the hosted computing environment.

## Patentansprüche

1. Computerimplementiertes Verfahren umfassend:
Empfangen einer Übertragung einer Operation zu einem Zielnetzwerkdienst (122) von mehreren verbindungsbeschränkten netzwerkzugänglichen Diensten, wobei die Übertragung eine Kennung eines Verbindungspools von mehreren Verbindungspools enthält, die dem Zielnetzwerkdienst (122) entspricht, wobei jeder Verbindungspool der mehreren Verbindungspools einen Pool von Verbindungen zu einem entsprechenden verbindungsbeschränkten netzwerkzugänglichen Dienst der mehreren verbindungsbeschränkten netzwerkzugänglichen Dienste bereitstellt;
Identifizieren einer den Verbindungspool bereitstellenden Computervorrichtung (154) basierend mindestens teilweise auf der Kennung des Verbindungspools; und
Routen der Übertragung zu der den Verbindungspool bereitstellenden Computervorrichtung (154);
wobei die den Verbindungspool bereitstellende Computervorrichtung (154)
die Übertragung erhält,
mit einem Geheimnissemanagerdienst (190) interagiert, der die Authentifizierungsinformationen für den Zielnetzwerkdienst (122) speichert,
von dem Geheimnissemanagerdienst (190) vor dem Verbinden mit dem Zielnetzwerkdienst (122) die Authentifizierungsinformationen für den Zielnetzwerkdienst (122) erhält,
die Authentifizierungsinformationen an die Übertragung anfügt und
die Übertragung über eine bestehende Verbindung mit dem Zielnetzwerkdienst (122) an den Zielnetzwerkdienst (122) weiterleitet.

2. Computerimplementiertes Verfahren nach Anspruch 1, wobei das Identifizieren von einer den Verbindungspool bereitstellenden Computervorrichtung (154) basierend mindestens teilweise auf der Kennung des Verbindungspools das Auflösen der Kennung des Verbindungspools in eine Netzwerkadresse der Computervorrichtung (154) unter Verwendung eines Domänennamendienst-Servers (DNS-Servers) umfasst.

3. Computerimplementiertes Verfahren nach Anspruch 1, wobei ein Satz von Computervorrichtungen den Verbindungspool bereitstellt, und wobei das Identifizieren einer den Verbindungspool bereitstellenden Computervorrichtung (154) basierend mindestens teilweise auf der Kennung des Verbindungspools das Anwenden von Lastausgleichskriterien umfasst, um die Computervorrichtung (154) aus dem Satz von Computervorrichtungen zu identifizieren.

4. Computerimplementiertes Verfahren nach Anspruch 1, wobei die Übertragung ferner Authentifizierungsinformationen einer Quellenvorrichtung enthält, und wobei das Verfahren ferner vor dem Routen der Übertragung zu der den Pool bereitstellenden Computervorrichtung (154) das Authentifizieren der Quellenvorrichtung unter Verwendung der Authentifizierungsinformationen umfasst.

5. Computerimplementiertes Verfahren nach Anspruch 4, wobei die Übertragung ein Netzwerkpaket enthält, das die mit einem Header eingekapselte Operation identifiziert, der die Authentifizierungsinformationen der Quellenvorrichtung enthält.

6. Computerimplementiertes Verfahren nach Anspruch 4, wobei die Quellenvorrichtung eine virtuelle Computervorrichtung ist, die in einer gehosteten Computerumgebung gehostet ist, und wobei die Authentifizierungsinformationen der Quellenvorrichtung an die virtuelle Computervorrichtung durch die gehostete Computerumgebung bereitgestellt werden.

7. Computerimplementiertes Verfahren nach Anspruch 1, wobei der Zielnetzwerkdienst (122) in einer virtuellen privaten Netzwerk-Umgebung (120A) enthalten ist, und wobei das Verfahren ferner umfasst:
Empfangen einer Anforderung zum Erzeugen des Verbindungspools entsprechend dem Zielnetzwerkdienst (122); und
Konfigurieren der Computervorrichtung (154), um auf die virtuelle private Netzwerk-Umgebung (120A) zuzugreifen.

8. Computerimplementiertes Verfahren nach Anspruch 1, ferner umfassend:
Empfangen einer Antwort des Zielnetzwerkdiensts (122) von der den Verbindungspool bereitstellenden Computervorrichtung (154); und
Zurücksenden der Antwort an eine Quellenvorrichtung, von der die Übertragung empfangen wurde.

9. System, umfassend:
einen Datenspeicher, der computerausführbare Anweisungen enthält; und
einen oder mehrere Prozessoren, die konfiguriert sind, die computerausführbaren Anweisungen auszuführen zum:
Empfangen einer Übertragung einer Operation zu einem Zielnetzwerkdienst (122) von mehreren verbindungsbeschränkten netzwerkzugänglichen Diensten, wobei die Übertragung eine Kennung eines Verbindungspools von mehreren Verbindungspools enthält, die dem Zielnetzwerkdienst (122) entspricht, wobei jeder Verbindungspool der mehreren Verbindungspools einen Pool von Verbindungen zu einem entsprechenden verbindungsbeschränkten netzwerkzugänglichen Dienst der mehreren verbindungsbeschränkten netzwerkzugänglichen Dienste bereitstellt;
Identifizieren einer den Verbindungspool bereitstellenden Computervorrichtung (154) basierend mindestens teilweise auf der Kennung des Verbindungspools; und
Routen der Übertragung zu der den Verbindungspool bereitstellenden Computervorrichtung (154);
wobei die den Verbindungspool bereitstellende Computervorrichtung (154) konfiguriert ist,
die Übertragung zu erhalten,
mit einem Geheimnissemanagerdienst (190) zu interagieren, der Authentifizierungsinformationen für den Zielnetzwerkdienst (122) speichert,
von dem Geheimnissemanagerdienst (190) vor dem Verbinden mit dem Zielnetzwerkdienst (122) die Authentifizierungsinformationen für den Zielnetzwerkdienst (122) zu erhalten,
die Authentifizierungsinformationen an die Übertragung anzufügen und
die Übertragung an den Zielnetzwerkdienst (122) über eine bestehende Verbindung mit dem Zielnetzwerkdienst (122) weiterzuleiten.

10. System nach Anspruch 9, wobei der Zielnetzwerkdienst (122) in einer virtuellen privaten Netzwerk-Umgebung (120A) enthalten ist, und wobei der eine oder die mehreren Prozessoren ferner konfiguriert sind zum:
Empfangen einer Anforderung zum Erzeugen des Verbindungspools entsprechend dem Zielnetzwerkdienst (122); und
Konfigurieren der Computervorrichtung (154), um auf die virtuelle private Netzwerk-Umgebung (120A) zuzugreifen.

11. System nach Anspruch 10, wobei die Computervorrichtung (154) die Übertragung außerhalb der virtuellen privaten Netzwerk-Umgebung (120A) empfängt und die Operation über die virtuelle private Netzwerk-Umgebung (120A) an den Zielnetzwerkdienst (122) weiterleitet.

12. System nach Anspruch 9, wobei die Übertragung ein mit einem Header gekapseltes Netzwerkpaket enthält, der die Kennung des Verbindungspools enthält, und wobei die den Verbindungspool bereitstellende Computervorrichtung (154) konfiguriert ist, das Netzwerkpaket vor dem Weiterleiten der Operation an den Zielnetzwerkdienst (122) zu entkapseln.

13. System nach Anspruch 9, wobei die Übertragung ferner Authentifizierungsinformationen einer Quellenvorrichtung enthält, und wobei der eine oder die mehreren Prozessoren ferner konfiguriert sind, vor dem Routen der Übertragung zu der den Pool bereitstellenden Computervorrichtung (154) die Quellenvorrichtung unter Verwendung der Authentifizierungsinformationen zu authentifizieren.

14. System nach Anspruch 13, wobei die Quellenvorrichtung eine virtuelle Computervorrichtung ist, die von einer gehosteten Computerumgebung gehostet wird, und wobei die Authentifizierungsinformationen der Quellenvorrichtung von der gehosteten Computerumgebung bereitgestellt werden.

## Revendications

1. Procédé mis en œuvre par ordinateur comprenant :
la réception d'une transmission d'une opération à un service réseau cible (122) d'une pluralité de services à connexion limitée et accessibles par réseau, la transmission comprenant un identifiant d'un groupe de connexions, à partir d'une pluralité de groupes de connexions, correspondant au service réseau cible (122), dans lequel chaque groupe de connexions de la pluralité de groupes de connexions fournit un groupe de connexions à un service correspondant à connexion limitée et accessible par réseau de la pluralité de services à connexion limitée et accessibles par réseau ;
l'identification d'un dispositif informatique (154) fournissant le groupe de connexions sur la base au moins en partie de l'identifiant du groupe de connexions ; et
l'acheminement de la transmission vers le dispositif informatique (154) fournissant le groupe de connexions ;
dans lequel le dispositif informatique (154) fournissant le groupe de connexions
obtient la transmission,
interagit avec un service gestionnaire de secrets (190) stockant les informations d'authentification pour le service réseau cible (122),
obtient, à partir du service gestionnaire de secrets (190), les informations d'authentification pour le service réseau cible (122) avant la connexion au service réseau cible (122),
joint les informations d'authentification à la transmission, et
transfert la transmission au service réseau cible (122) à travers une connexion existante au service réseau cible (122).

2. Procédé mis en œuvre par ordinateur selon la revendication 1, dans lequel l'identification d'un dispositif informatique (154) fournissant le groupe de connexions sur la base au moins en partie de l'identifiant du groupe de connexions comprend la résolution de l'identifiant du groupe de connexions en une adresse de réseau du dispositif informatique (154) utilisant un serveur de service de nom de domaine (DNS).

3. Procédé mis en œuvre par ordinateur selon la revendication 1, dans lequel un ensemble de dispositifs informatiques fournit le groupe de connexions, et dans lequel l'identification d'un dispositif informatique (154) fournissant le groupe de connexions sur la base au moins en partie de l'identifiant du groupe de connexions comprend l'application de critères d'équilibrage de charge pour identifier le dispositif informatique (154) parmi l'ensemble de dispositifs informatiques.

4. Procédé mis en œuvre par ordinateur selon la revendication 1, dans lequel la transmission comprend en outre des informations d'authentification d'un dispositif source, et dans lequel le procédé comprend en outre l'authentification du dispositif source à l'aide des informations d'authentification avant d'acheminer la transmission vers le dispositif informatique (154) fournissant le groupe.

5. Procédé mis en œuvre par ordinateur selon la revendication 4, dans lequel la transmission comprend un paquet de réseau identifiant l'opération encapsulée avec un en-tête comprenant les informations d'authentification du dispositif source.

6. Procédé mis en œuvre par ordinateur selon la revendication 4, dans lequel le dispositif source est un dispositif informatique virtuel hébergé sur un environnement informatique hébergé, et dans lequel les informations d'authentification du dispositif source sont fournies au dispositif informatique virtuel par l'environnement informatique hébergé.

7. Procédé mis en œuvre par ordinateur selon la revendication 1, dans lequel le service réseau cible (122) est inclus au sein d'un environnement de réseau privé virtuel (120A), et dans lequel le procédé comprend en outre :
la réception d'une demande de génération du groupe de connexions correspondant au service réseau cible (122) ; et
la configuration du dispositif informatique (154) pour accéder à l'environnement de réseau privé virtuel (120A).

8. Procédé mis en œuvre par ordinateur selon la revendication 1, comprenant en outre : la réception d'une réponse du service réseau cible (122) depuis le dispositif informatique (154) fournissant le groupe de connexions ; et
le renvoi de la réponse à un dispositif source à partir duquel la transmission a été reçue.

9. Système comprenant :
un stockage de données incluant des instructions exécutables par ordinateur ; et
un ou plusieurs processeurs configurés pour exécuter des instructions exécutables par ordinateur pour :
recevoir une transmission d'une opération à un service réseau cible (122) d'une pluralité de services à connexion limitée et accessibles par réseau, la transmission comprenant un identifiant d'un groupe de connexions, à partir d'une pluralité de groupes de connexions, correspondant au service réseau cible (122), dans lequel chaque groupe de connexions de la pluralité de groupes de connexions fournit un groupe de connexions à un service correspondant à connexion limitée et accessible par réseau de la pluralité de services à connexion limitée et accessibles par réseau ;
identifier un dispositif informatique (154) fournissant le groupe de connexions sur la base au moins en partie de l'identifiant du groupe de connexions ; et
acheminer la transmission vers le dispositif informatique (154) fournissant le groupe de connexions ;
dans lequel le dispositif informatique (154) fournissant le groupe de connexions est configuré pour
obtenir la transmission,
interagir avec un service gestionnaire de secrets (190) stockant les informations d'authentification pour le service réseau cible (122),
obtenir, à partir du service gestionnaire de secrets (190), les informations d'authentification pour le service réseau cible (122) avant la connexion au service réseau cible (122),
joindre les informations d'authentification à la transmission, et
transférer la transmission au service réseau cible (122) à travers une connexion existante au service réseau cible (122).

10. Système selon la revendication 9, dans lequel le service réseau cible (122) est inclus au sein d'un environnement de réseau privé virtuel (120A), et dans lequel les un ou plusieurs processeurs sont en outre configurés pour :
recevoir une demande de génération du groupe de connexions correspondant au service réseau cible (122) ; et
configurer le dispositif informatique (154) pour accéder à l'environnement de réseau privé virtuel (120A).

11. Système selon la revendication 10, dans lequel le dispositif informatique (154) reçoit la transmission en dehors de l'environnement de réseau privé virtuel (120A) et transfert l'opération au service réseau cible (122) à travers l'environnement de réseau privé virtuel (120A).

12. Système selon la revendication 9, dans lequel la transmission comprend un paquet de réseau encapsulé avec un en-tête comprenant l'identifiant du groupe de connexions, et dans lequel le dispositif informatique (154) fournissant le groupe de connexions est configuré pour désencapsuler le paquet de réseau avant de transférer l'opération au service réseau cible (122).

13. Système selon la revendication 9, dans lequel la transmission comprend en outre des informations d'authentification d'un dispositif source, et dans lequel les un ou plusieurs processeurs sont en outre configurés pour authentifier le dispositif source à l'aide des informations d'authentification avant d'acheminer la transmission vers le dispositif informatique (154) fournissant le groupe.

14. Système selon la revendication 13, dans lequel le dispositif source est un dispositif informatique virtuel hébergé par un environnement informatique hébergé, et dans lequel les informations d'authentification du dispositif source sont fournies par l'environnement informatique hébergé.
